# EUROPÄISCHE PATENTANMELDUNG

(11) **EP 1 296 161 A2**
(43) Veröffentlichungstag der Anmeldung: **26.03.2003**
(21) Anmeldenummer: 02020344.4
(22) Anmeldetag: 12.09.2002
(51) Int. Cl.: G01V 8/22

(54) **Lichtgitter mit Strahlteiler**

(30) Priorität: 21.09.2001 DE 10146639
(71) Anmelder: SICK AG, 79183 Waldkirch (DE)
(72) Erfinder: Wüstefeld, Martin, 79350 Sexau (DE); Henkel, Olaf, 79276 Reute (DE)
(74) Vertreter: Ludewigt, Christoph

(57) **Zusammenfassung**

Eine optoelektronische Vorrichtung zur Zutrittsabsicherung weist auf der einen Seite der Überwachungsstrecke (4) eine aktive Sender-/Empfänger-/Versorgungseinheit (1) und auf der gegenüberliegenden Seite eine passive Reflektoreinheit (2) auf. Dabei wird das Licht von einem Sendeelement kommend durch die Überwachungsstrecke geführt und in einer Umlenkeinheit (U1,U2) in mehrere räumlich getrennte Teilstrahlen zerlegt. Diese Teilstrahlen werden durch die Überwachungsstrecke zurückgeführt und von mehreren Empfangselementen (E1,E2) empfangen und ausgewertet.

## Beschreibung

Die Erfindung betrifft eine optoelektronische Vorrichtung nach dem Oberbegriff des Patentanspruchs 1.

Derartige optoelektronische Vorrichtungen werden beispielsweise verwendet, um den Zugang zu einem Maschinenarbeitsbereich, nach Art einer Lichtschranke, zu überwachen. Hierbei sind die aktiven Komponenten, wie z. B. der Lichtsender, der Lichtempfänger, die Signalverarbeitungseinheit und dergleichen in einem gemeinsamen Gehäuse, welches sich an einer Seite des Überwachungsbereiches befindet, untergebracht. Um das vom Lichtsender ausgehende Licht nach Durchgang durch den Überwachungsbereich zum Lichtempfänger zurück zu lenken, ist auf der gegenüberliegenden Seite des Überwachungsbereiches eine nur mit passiven Komponenten bestückte Reflexionseinheit erforderlich, die im Allgemeinen den vom Lichtsender kommenden Lichtstrom zum Empfänger zurückreflektiert.

Abhängig vom jeweiligen Anwendungsbereich der Zugangsabsicherung ist es erforderlich, dass mehrere räumlich versetze Lichtstrahlen vorhanden sind, um die Gefahr des Über-/Unterschreitens der Schutzeinrichtung auszuschließen.

Eine derartige Vorrichtung ist aus der DE 199 25 553 bekannt. Bei dieser Vorrichtung werden von zwei Lichtsendern zeitversetzt Lichtimpulse durch den Überwachungsbereich gesendet und nach Reflexion an einem Umlenkelement auf einen gemeinsamen Lichtempfänger geführt. Damit jedoch beide Sendelichtstrahlen auf den gleichen Lichtempfänger geführt werden können, ist dabei eine Strahlweiche notwendig, welche den geometrisch halben Lichtstrahlquerschnitt vom ersten Lichtsender und den komplementären halben Lichtstrahlquerschnitt vom zweiten Lichtsender zum gemeinsamen Lichtempfänger leitet. Damit die beiden Lichtpfade die annähernd gleiche Energiebilanz aufweisen, ist eine relativ genaue Justierung der beiden Lichtstrahlen zur Strahlweiche erforderlich. Ebenfalls ist diese Umlenkeinheit mit mindestens vier zueinander exakt ausgerichteten Spiegeln sehr aufwendig und somit kostenintensiv. Damit diese Vorrichtung sicher arbeitet, ist es notwendig, dass die beiden Lichtsender nicht gleichzeitig Lichtimpulse abstrahlen, sondern dies nur zeitversetzt tun. Dies hat den Nachteil, dass aufgrund der Notwendigkeit des Zeitversatzes bei der Emission der beiden Lichtsender mehr Zeit benötigt wird und damit keine extrem kurze Wiederholraten möglich sind. Ebenfalls nachteilig kann sich dies auch bei hoher Störstrahlungsbelastung der Umgebung auswirken.

Eine weitere Vorrichtung dieser Art ist aus der DE 39 39 191 bekannt. Hier wird die mehrstrahlige optoelektronische Überwachungseinrichtung dadurch erzeugt, dass mehrere Einweglichtschranken zu einem Lichtgitter zusammengesetzt werden. In einem ersten Gehäuse, auf einer Seite der Überwachungsfläche, sind mehrere Lichtsender benachbart angeordnet, während auf der gegenüberliegenden Seite der Überwachungsfläche, in einem zweiten Gehäuse, mehrere Lichtempfänger, vergleichbar den Lichtsendern, angeordnet sind. Jeder Lichtsender bildet dabei mit dem gegenüberliegenden Lichtempfänger eine Lichtschranke. Diese zusammenarbeitenden Paare werden nacheinander aktiviert und erkennen somit Objekte in der Überwachungsfläche. Nachteilig ist hierbei nicht nur, dass beide Gehäuse eine elektrische Versorgungsleitung benötigen, sondern auch noch eine elektrische oder optische Synchronisation zwischen den räumlich getrennten einzelnen Paaren notwendig ist, damit die Lichtsender mit den entsprechenden Lichtempfängern im Gleichtakt aktiviert werden.

Der Erfindung liegt die Aufgabe zu Grunde, mit einer Vorrichtung der eingangs genannten Art die Nachteile des bekannten Standes der Technik zu überwinden und mit möglichst wenig aktiven Bauelementen, die in nur einem Gehäuse an einer Seite des Überwachungsbereiches angeordnet sind, eine justierunkritische mehrstrahlige Überwachungseinrichtung zu erstellen.

Die Aufgabe wird gelöst durch eine Vorrichtung mit den Merkmalen des Anspruches 1.

Die erfindungsgemäße Vorrichtung weist einen Lichtsender und mindestens zwei Lichtempfänger auf. Dabei emittiert der Lichtsender einen Sendelichtstrahl in Richtung der Überwachungsfläche. Wird dieser Sendelichtstrahl durch kein Objekt unterbrochen, trifft er am Ende der Überwachungsstrecke auf eine Umlenkeinheit. In dieser Umlenkeinheit wird der einfallende Sendelichtstrahl in mindestens zwei, mit unterschiedlichem Abstand versetzte Teilstrahlen, in entgegengesetzter Richtung über die Überwachungsstrecke zurückreflektiert. Bei weiterhin freiem Strahlengang treffen die versetzten Teilstrahlen auf die ebenfalls um den gleichen Betrag versetzt angeordneten Lichtempfänger, welche das auftreffende Licht in eine elektrische Größe umwandeln.

Durch den unterschiedlichen Versatz zwischen einfallendem Sendelichtstrahl und den reflektierten Teilstrahlen wird die Überwachungsfläche mit mindestens drei verschiedenen Linien durchstrahlt und erfüllt somit die gleiche Funktion, wie ein dreistrahliges Lichtgitter.

Der wesentliche Vorteil der erfindungsgemäßen Vorrichtung ist darin zu sehen, dass für die Erzeugung von drei Strahlen nicht mehr drei Sender und drei Empfänger erforderlich sind, sondern nur noch ein Sender und zwei Empfänger. Darüber hinaus sind alle drei Strahlen zum gleichen Zeitpunkt aktiv und müssen nicht zeitversetzt im Wechsel unterschiedlich aktiviert werden.

In den Unteransprüchen sind weitere vorteilhafte Ausführungsformen beschrieben.

Die Erfindung wird im Folgenden anhand von Ausführungsbeispielen unter Bezugnahme auf die Figuren 1 bis 3 beschrieben.
- Fig. 1: eine schematische Prinzipdarstellung einer erfindungsgemäßen optoelektronischen Vorrichtung mit drei Strahlen.
- Fig. 2: eine schematische Prinzipdarstellung einer erfindungsgemäßen optoelektronischen Vorrichtung mit vier Strahlen.
- Fig. 3: eine Weiterbildung der erfindungsgemäßen optoelektronischen Vorrichtung mit drei Strahlen in perspektivischer Darstellung.

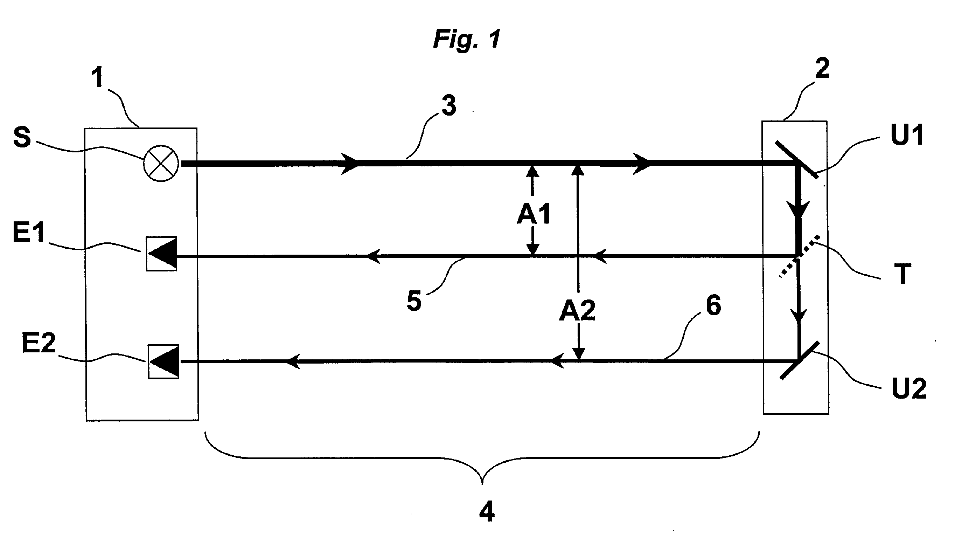

Nach Fig. 1 sendet ein in einer Sender-/Empfänger-Nersorgungseinheit 1 untergebrachter Lichtsender S ein schmales leicht divergentes Sendelichtbündel 3 durch eine Überwachungsstrecke 4 in Richtung auf die Umlenkeinheit 2. Das Sendelichtbündel 3 trifft innerhalb der Umlenkeinheit 2 unter einem Winkel von 45° auf einen ersten Umlenkspiegel U1, welcher das Sendelichtbündel um 90° in Richtung zu einem Strahlteiler T umlenkt. Der Strahlteiler T ist ebenfalls unter 45° zur auftreffenden Strahlung ausgerichtet und besitzt die Eigenschaft, eine Teilmenge (vorzugsweise 50%) der auftreffenden Strahlung ohne Richtungsänderung zu transmittieren und den restlichen Teil unter einem Winkel von 90° zu reflektieren. Der reflektierte Teilstrahl 5 gelangt, versetzt um den Betrag A1, nach Durchstrahlen der Überwachungsstrecke 4 zu einem Lichtempfänger E1, während der transmittierte Teilstrahl 6, nach erneuter Umlenkung an einem zweiten, unter 45° ausgerichteten Umlenkspiegel U2, versetzt um den Betrag A2, zu einem zweiten Lichtempfänger E2 gelangt. Da der Umlenkspiegel U1 mit dem Strahlteiler T bzw. mit dem Umlenkspiegel U2 einen Winkel von 90° bildet, wird sowohl der Teilstrahl 5 als auch der Teilstrahl 6 in der dargestellten Zeichnungsebene parallel zum Sendelichtbündel 3 verlaufen. Dies trifft auch dann zu, wenn die Umlenkeinheit 2 um eine nicht dargestellte Achse senkrecht zur Zeichenebene leicht verdreht ist.

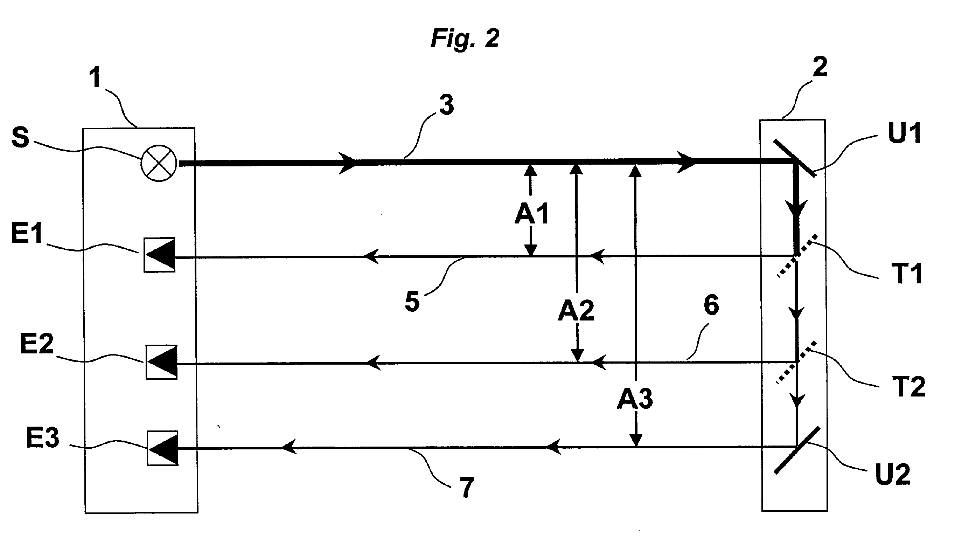

Fig. 2 zeigt eine Anordnung mit vier Strahlen. Ein erster Strahlteiler T1, dessen Lot mit dem einfallenden Lichtstrahl einen Winkel von 45° bildet, reflektiert vom Sendelichtbündel 3 etwa 1/3 der Lichtmenge um den Betrag A1 parallel versetzt zum Lichtempfänger E1, während die restliche Lichtmenge zum Strahlteiler T2 gelangt. Dieser Strahlteiler T2 besitzt, wie auch der in Fig. 1 dargestellte Strahlteiler T, ein in etwa ausgeglichenes Reflexions- Transmissionsverhalten. Der transmittierte Teilstrahl 7 gelangt nach erneuter Umlenkung am zweiten Umlenkspiegel U2, versetzt um den Betrag A3, zum Lichtempfänger E3, während der Teilstrahl 6, um den Betrag A2 versetzt, auf den Lichtempfänger E2 ausgerichtet ist. Dies hat in Summe zur Folge, dass bei freier Überwachungsstrecke an den drei Empfängern annähernd die gleiche Lichtenergie auftrifft, was für die nachfolgende Signalverarbeitung von Vorteil ist.

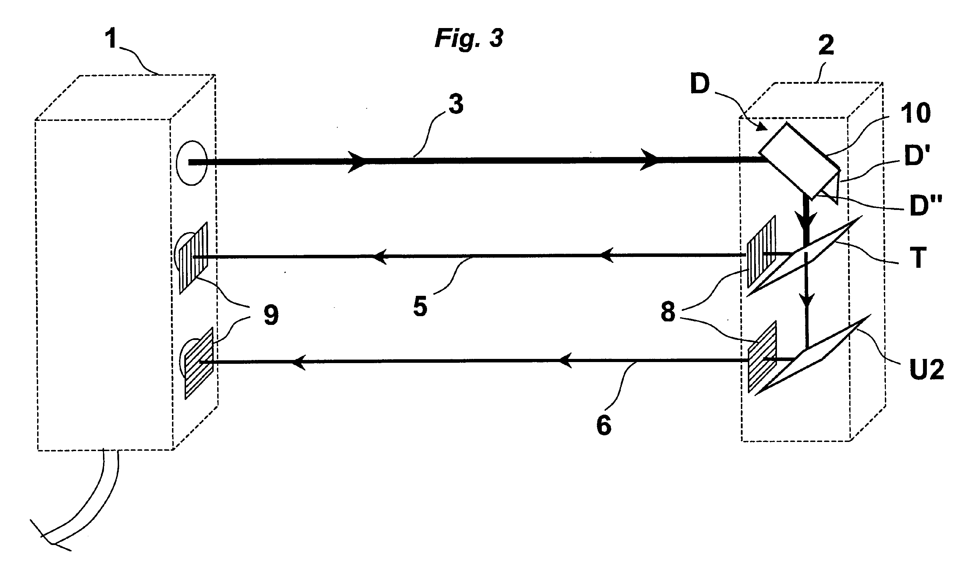

Fig. 3 zeigt eine vorteilhafte Weiterbildung der erfindungsgemäßen optoelektronischen Vorrichtung mit drei Strahlen, bei welcher der erste Umlenkspiegel D in der Umlenkeinheit 2 als ein Dachkantspiegel ausgebildet ist. Der Dachkantspiegel D setzt sich aus zwei unter einem Winkel von 90° angeordneten Planspiegeln D', D" zusammen. Die Schnittlinie 10 der beiden Planspiegel verläuft unter einem Winkel von 45° zum Sendelichtbündel 3. Die Spiegelflächen der Planspiegel D', D" sind dabei dem Sendelichtbündel 3 zugewandt, so dass das Sendelichtbündel 3 auf eine der beiden Planspiegelflächen und vorzugsweise teilweise auf die eine und teilweise auf die andere Spiegelfläche auftrifft. Da jeder Teilstrahl in der Umlenkeinheit 2 nochmals um 90° an einem Strahlteiler T oder Umlenkspiegel U2 umgelenkt wird, durchläuft er bei der Anordnung mit dem Dachkantspiegel D immer drei Richtungsänderungen. Da diese drei Richtungsänderungen durch drei Spiegelflächen, welche jeweils zueinander einen Winkel von 90° bilden, hervorgerufen werden, liegt die Sonderform einer Retroreflexion in Form eines Trippelspiegels vor. Diese Retroreflexion hat den besonderen Vorteil, dass die aufreffende Strahlung, d. h. das Sendelichtbündel 3 und die austretenden Teilstrahlen zueinander parallel verlaufen und dabei die Umlenkeinheit nicht exakt zur Sende-/Empfangseinheit einjustiert werden muss.

Fig. 3 zeigt den weiteren Erfindungsgedanken, dass die beiden Teilstrahlen 5 und 6 durch Polarisationsfilter 8 am Ausgang der Umlenkeinheit 2 und korrespondierenden Polarisationsfilter 9 beim Eintritt der Teilstrahlen in die Sender-/Empfänger-/Versorgungseinheit 1 voneinander entkoppelbar sind. Dies wird dadurch erreicht, dass z. B. die Polarisationsfilter im Teilstrahl 5 nur die horizontale Schwingungsrichtung durchlassen, während die Polarisationsfilter im Teilstrahl 6 nur für die vertikale Komponente durchlässig ist.

Unter dem Begriff "Licht" ist hierbei nicht nur der dem menschlichen Auge zugängliche Wellenlängenbereich zu verstehen, sondern auch die angrenzenden Spektralbereiche aus dem ultravioletten und infraroten Bereich. Darüber hinaus sind in der Erfindung sämtliche Lichtarten von Gleichlicht und Wechsellicht möglich.

## Patentansprüche

1. Optoelektronische Vorrichtung, insbesondere zur Zutrittsabsicherung, welche auf der einen Seite einer Überwachungsstrecke von einer aktiven Sender-/Empfänger-Nersorgungseinheit und auf der gegenüberliegenden Seite durch eine passive Umlenkeinheit begrenzt ist, **dadurch gekennzeichnet, dass** ein Sendelichtbündel von einem Lichtsender der Sender-/Empfänger-Nersorgungseinheit kommend auf die Umlenkeinheit trifft, die das Sendelichtbündel in mehrere räumlich getrennte Teilstrahlen zerlegt und dass in der Sender-/Empfänger-Nersorgungseinheit zur Erfassung dieser Teilstrahlen je ein Lichtempfänger angeordnet ist.

2. Optoelektronische Vorrichtung nach Anspruch 1 **dadurch gekennzeichnet, dass** die einzelnen Lichtempfänger zeitversetzt zum Empfang der einzelnen Teilstrahlen aktiviert sind.

3. Optoelektronische Vorrichtung nach Anspruch 1 oder 2 **dadurch gekennzeichnet, dass** der räumliche Abstand der Teilstrahlen einstellbar ist.

4. Optoelektronische Vorrichtung nach einem der vorhergehenden Ansprüche **dadurch gekennzeichnet, dass** in der Umlenkeinheit optische Strahlteilerspiegel zur Aufspaltung des Sendelichtbündels in die einzelnen Teilstrahlen vorhanden sind.

5. Optoelektronische Vorrichtung nach Anspruch 4 **dadurch gekennzeichnet, dass** das Verhältnis von Reflexion zu Transmission der Strahlteilerspiegel so angepasst ist, dass die Lichtenergie der einzelnen Teilstahlen annähernd gleich groß ist.

6. Optoelektronische Vorrichtung nach einem der vorhergehenden Ansprüche **dadurch gekennzeichnet, dass** das Sendelichtbündel in der Umlenkeinheit auf einen Dachkantspiegel auftrifft.

7. Optoelektronische Vorrichtung nach Anspruch 6 **dadurch gekennzeichnet, dass** der Dachkantspiegel als Dachkantprisma ausgebildet ist.

8. Optoelektronische Vorrichtung nach einem der vorhergehenden Ansprüche **dadurch gekennzeichnet, dass** am Lichtaustritt bzw. am Lichteintritt der Sender-/Empfänger-/Versorgungseinheit Abbildungsoptiken zur Strahlformung angeordnet sind.

9. Optoelektronische Vorrichtung nach einem der vorhergehenden Ansprüche **dadurch gekennzeichnet, dass** die Teilstrahlen mit Polarisationsfilter zur Vermeidung von gegenseitiger Beeinflussung entkoppelt sind.
